# EUROPÄISCHE PATENTANMELDUNG

(11) **EP 4 621 265 A1**
(43) Veröffentlichungstag der Anmeldung: **24.09.2025**
(21) Anmeldenummer: 25165414.1
(22) Anmeldetag: 21.03.2025
(51) Int. Cl.: F16H 49/00

(54) **GETRIEBE**

(30) Priorität: 21.03.2024 LU 506642
(71) Anmelder: Ovalo GmbH, 65555 Limburg (DE)
(72) Erfinder: Yilmaz, Anil-Cem, 35641 Aßlar (DE); Meudt, Marvin, 56410 Montabaur (DE)
(74) Vertreter: Hoffmann, Jürgen

(57) **Zusammenfassung**

Die Erfindung betrifft ein Getriebe mit einem ersten Getriebebauteilelement und einem zweiten Getriebebauteilelement, die mittel wenigstens eines Verbinders, der an dem ersten Getriebebauteilelement und an dem zweiten Getriebebauteilelement befestigt ist, elastisch beweglich miteinander verbunden sind. Das Getriebe zeichnet sich dadurch aus, dass das erste Getriebebauteilelement und das zweite Getriebebauteilelement derart ausgebildet sind, dass die Anzahl und/oder die Anordnung und/oder die Art der das erste Getriebebauteilelement und das zweite Getriebebauteilelement verbindenden Verbinder ohne strukturelle Veränderung des ersten Getriebebauteilelements und/oder des zweiten Getriebebauteilelements, insbesondere werkzeugfrei, veränderbar ist.

## Beschreibung

Die Erfindung betrifft ein Getriebe mit einem ersten Getriebebauteilelement und einem zweiten Getriebebauteilelement, die mittels wenigstens eines Verbinders, der an dem ersten Getriebebauteilelement und an dem zweiten Getriebebauteilelement befestigt ist, elastisch beweglich, insbesondere relativ zueinander drehbar, miteinander verbunden sind, wobei das erste Getriebebauteilelement und das zweite Getriebebauteilelement derart ausgebildet sind, dass die Anzahl und/oder die Anordnung und/oder die Art der das erste Getriebebauteilelement und das zweite Getriebebauteilelement verbindenden Verbinder ohne strukturelle Veränderung des ersten Getriebebauteilelements und/oder des zweiten Getriebebauteilelements, insbesondere werkzeugfrei, veränderbar ist.

Die Erfindung betrifft außerdem ein Verfahren zur Herstellung von Getrieben.

Getriebe sind in unterschiedlichen Bauformen bekannt und dienen dazu, Bewegungsgrößen zu ändern, wobei es sich bei der Bewegung oftmals um eine Rotationsbewegung handelt. Eine mögliche Bauform ist ein Spannungswellengetriebe.

Ein Spannungswellengetriebe besitzt zumeist ein starres, im Querschnitt kreisförmiges, innenverzahntes Zahnrad, das Circularspline genannt wird, und ein flexibles außenverzahntes Zahnrad, das Flexspline genannt wird und das in dem von einem starren, innenverzahnten Zahnrad umgebenen Raumvolumen angeordnet ist. Innerhalb des Flexsplines ist ein zumeist ovaler Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das Wälzlager und den Flexspline zu einer ovalen Form, um die Verzahnungen des Circularsplines und des Flexsplines in der Hochachse des ovalen Wellengenerators miteinander in Eingriff zu bringen.

Der Flexspline weist eine geringere Anzahl von Zähnen auf als der Circularspline. Wenn der Wellengenerator rotiert, wälzt die Außenseite des Flexsplines auf der Innenseite des Circularsplines ab, wobei die Zähne des Flexsplines an gegenüberliegenden Seiten umlaufend in und außer Eingriff mit den Zähnen des Circularsplines gelangen. Aufgrund des Unterschiedes der Zähneanzahlen kommt es zu einer Drehung des Flexsplines relativ zu dem Circularspline, wenn der Wellengenerator rotiert und der Flexspline, beispielsweise relativ zu dem Getriebegehäuse, festgehalten wird. Der Wellengenerator ist zumeist elliptisch ausgebildet. Es ist jedoch jede von der Kreisform abweichende Form möglich, die im Ergebnis den beschriebenen Eingriff der Verzahnung des flexiblen, außenverzahnten Zahnrades in die Verzahnung des starren innenverzahnten Zahnrades bewirkt. Auch ist es möglich, den Wellengenerator derart auszubilden, dass die Verzahnung des Flexsplines an drei oder mehr Stellen in die Verzahnung des Circularsplines eingreift.

In Ringbauweise eines Spannungswellengetriebes sind zwei innenverzahnte, starre Hohlräder (Circularspline und Dynamicspline) mit unterschiedlicher Zähnezahl vorhanden, deren Verzahnungen mit der Außenverzahnung der radialflexiblen, außenverzahnten Hülse (Flexspline) in Zahneingriff stehen. Hierbei weist eines der innenverzahnten Hohlräder dieselbe Anzahl von Zähnen auf wie der Flexspline, während das andere innenverzahnte Hohlrad mehr Zähne aufweist als der Flexspline.

Aus WO 2010 142318 A1 ist eine Vorrichtung zur Messung des Drehmoments, das auf eine Abtriebswelle eines Spannungswellengetriebes übertragen wird, bekannt. Die Vorrichtung weist ein Gehäuse, einen in dem Gehäuse montierten Circularspline und einen an die Abtriebswelle montierten Flexspline auf. Die Vorrichtung umfasst außerdem Sensoren, die zur Messung von Kräften zwischen dem Circularspline und dem Gehäuse angeordnet sind, sowie eine Recheneinheit, die Messsignale von den Sensoren empfängt und auf dieser Grundlage das übertragene Drehmoment berechnet.

Aus der europäischen Patentanmeldung EP 4 257 848 A1 ist ein Getriebesystem bekannt, das ein Drehmomentabstützelement und ein Dreiwellengetriebe beinhaltet. Das Dreiwellengetriebe weist wenigstens ein, insbesondere ringförmiges, Zahnrad auf. Das Zahnrad ist als Flansch ausgebildet oder weist einen Flansch auf. Das Zahnrad ist mittels eines elastisch verformbaren Koppelbauteils, das einen mit dem Flansch drehfest verbundenen Gegenflansch aufweist, an dem Drehmomentabstützelement festgelegt.

Aus der deutschen Offenlegungsschrift DE 10 2016 204 784 A1 ist ein Wellgetriebe mit einem Wellengenerator bekannt. Das Wellgetriebe weist ein mittels des Wellengenerators verformbares und außenverzahntes Getriebeelement auf, das mit einem innenverzahnten Getriebeelement in Zahneingriff steht. Das innenverzahnte Getriebeelement ist über mehrere Blattfedern mit einem Gehäusebauteil verbunden.

Aus EP 4 276 332 ist Die Erfindung betrifft ein Spannungswellengetriebe mit einem Circularspline, einem Flexspline und mit einem Wellengenerator bekannt. Das Spannungswellengetriebe zeichnet sich dadurch aus, dass der Wellengenerator relativ zu dem Flexspline axial verschiebbar angeordnet ist.

Es ist die Aufgabe der vorliegenden Erfindung, ein Getriebe anzugeben, das hinsichtlich unterschiedlicher Funktionsumfänge und/oder Eigenschaften einfach und effizient herstellbar und/oder umrüstbar ist.

Die Aufgabe wird durch ein Getriebe gelöst, das dadurch gekennzeichnet ist, dass das Getriebe mehrere hinsichtlich Größe und Form und Anordnung ihrer Befestigungsabschnitte gleich ausgebildete Verbinder aufweist, von denen sich mindestens zwei hinsichtlich wenigstens einer Eigenschaft voneinander unterscheiden.

Unter der Formulierung "ohne strukturelle Veränderung" ist insbesondere zu verstehen, dass die Getriebebauteilelemente nach einer Änderung der Anzahl und/oder der Anordnung und/oder der Art der Verbinder ihre ursprüngliche Form, Oberfläche, Materialeigenschaften und Funktionalität vollständig beibehalten haben und insbesondere keine plastischen Verformungen, Risse oder Veränderungen der Gefügestruktur aufweisen.

Es ist eine weitere Aufgabe der vorliegenden Erfindung, ein Verfahren zum anzugeben, mit dem in einfacher Weise Getriebe herstellbar sind, die unterschiedliche Funktionsumfänge und/oder Eigenschaften aufweisen.

Diese Aufgabe wird durch ein Verfahren gelöst, das dadurch gekennzeichnet ist, dass
a. eine Vielzahl von, insbesondere gleichen, ersten Getriebebauteilelementen und, insbesondere gleichen, zweiten Getriebebauteilelementen bereitgestellt werden, die jeweils mittels wenigstens eines Verbinders, der an dem ersten Getriebebauteilelement und/oder an dem zweiten Getriebebauteilelement befestigbar ist, elastisch beweglich miteinander verbindbar sind, und dass
b. eine Vielzahl von Verbindern zum Verbinden jeweils eines der ersten Getriebebauteilelemente mit einem der zweiten Getriebebauteilelemente bereitgestellt werden, und dass
c. für jedes der herzustellenden Getriebe jeweils eines der ersten Getriebebauteilelemente mit einem der zweiten Getriebebauteilelemente mittels wenigstens eines der Verbinder, der sowohl an dem ersten Getriebebauteilelement als auch an dem zweiten Getriebebauteilelement befestigt wird, derart verbunden werden, dass sich wenigstens zwei der Getriebe hinsichtlich der Anzahl und/oder der Anordnung und/oder der Art der das erste Getriebebauteilelement und das zweite Getriebebauteilelement verbindenden Verbinder voneinander unterscheiden.

Die Erfindung hat insbesondere den ganz besonderen Vorteil, dass in einfacher Weise Getriebe hergestellt werden können, die einen ganz unterschiedlichen Funktionsumfang und/oder ganz unterschiedliche Eigenschaften aufweisen. Hierbei können in vorteilhafter Weise für Getriebe, die einen ganz unterschiedlichen Funktionsumfang und/oder ganz unterschiedliche Eigenschaften aufweisen, gleiche Teile, insbesondere gleiche erste Getriebebauteilelemente und gleiche zweite Getriebebauteilelemente verwendet werden. Außerdem kann vorteilhaft insbesondere vorgesehen sein, dass die für die Herstellung der Getriebe bereitgestellten Verbinder hinsichtlich Größe und Form und Anordnung ihrer ersten Befestigungsabschnitte und zweiten Befestigungsabschnitte, mittels denen sie an den Getriebebauteilelementen befestigbar sind, gleich ausgebildet sind und sich lediglich hinsichtlich wenigstens einer Eigenschaft voneinander unterscheiden. Auf diese Weise kann nach dem Prinzip eines Baukastens jeweils eine individuelle Kombination von Verbindern zum Verbinden der ersten und zweiten Getriebebauteilelemente realisiert werden.

Insbesondere hat die Erfindung den weiteren ganz besonderen Vorteil, dass diese Getriebe in einfacher Weise hinsichtlich des Funktionsumfangs und/oder der Eigenschaften umgerüstet werden können, indem die Anzahl und/oder die Anordnung und/oder die Art der das erste Getriebebauteilelement und das zweite Getriebebauteilelement verbindenden Verbinder ohne strukturelle Veränderung des ersten Getriebebauteilelements und/oder des zweiten Getriebebauteilelements, insbesondere werkzeugfrei, verändert wird.

Außerdem hat die Erfindung den ganz besonderen Vorteil, dass innerhalb des Getriebes eine elastische Ausgleichsmöglichkeit geschaffen ist, die das Getriebe vor einer Beschädigung im Überlastfall schützt. Hierzu ist der wenigstens eine Verbinder wenigstens teilweise elastisch verformbar ausgebildet. Insbesondere kann vorteilhaft vorgesehen sein, dass zumindest ein Verformungsabschnitt des Verbinders elastisch verformbar ausgebildet ist.

Das Getriebe kann vorteilhaft in der Weise ausgebildet sein, dass der Verbinder einen ersten Befestigungsabschnitt aufweist, mittels dem er an dem ersten Getriebebauteilelement befestigt ist, und dass der Verbinder außerdem einen zweiten Befestigungsabschnitt aufweist, mittels dem er an dem zweiten Getriebebauteilelement befestigt ist. Eine solche Ausführung erlaubt ein ganz besonders flexibles Herstellen von Getrieben mit unterschiedlichen Eigenschaften.

Insbesondere kann vorteilhaft vorgesehen sein, dass das erste Getriebebauteilelement und das zweite Getriebebauteilelement zusammen mit den sie verbindenden Verbindern ein Getriebebauteil bilden, welches ein Drehmoment überträgt oder ein Drehmoment abstützt.

Die Befestigung des Verbinders mit dem ersten Getriebebauteilelement und/oder mit dem zweiten Getriebebauteilelement kann beispielsweise eine kraftschlüssige Verbindung aufweisen oder als ausschließlich kraftschlüssige Verbindung ausgebildet sein. Beispielsweise kann vorteilhaft vorgesehen sein, dass ein erster oder zweiter Befestigungsabschnitt des Verbinders zwischen zwei Teilen des Getriebebauteilelements eingeklemmt wird, wobei beispielsweise eine Klemmschraube und/oder eine Feder vorhanden sein kann, um die Klemmkraft bereitzustellen.

Alternativ oder zusätzlich kann die Befestigung des Verbinders mit dem ersten Getriebebauteilelement und/oder mit dem zweiten Getriebebauteilelement eine formschlüssige Verbindung, insbesondere eine Steckverbindung, aufweisen. Es ist vorteilhaft auch möglich, dass die Befestigung des Verbinders mit dem ersten Getriebebauteilelement und/oder dem zweiten Getriebebauteilelement als ausschließlich formschlüssige Verbindung ausgebildet ist.

Bei einer ganz besonders vorteilhaften Ausführung ist die Befestigung des Verbinders mit dem ersten Getriebebauteilelement und/oder dem zweiten Getriebebauteilelement zerstörungsfrei lösbar ausgebildet. Eine solche Ausführung ist ganz besonders flexibel verwendbar, insbesondere im Hinblick auf eine spätere Umrüstung des Getriebes. Beispielsweise kann ein Verbinder, der keinen Sensor aufweist, bei einer solchen Ausführung einfach gegen einen Verbinder, der einen Sensor aufweist oder als Sensor ausgebildet ist, ausgetauscht werden.

Bei einer ganz besonders vorteilhaften Ausführung ist der erste Befestigungsabschnitt als Steckabschnitt ausgebildet oder weist einen Steckabschnitt auf, der, insbesondere passgenau, in eine Steckausnehmung des Getriebebauteilelements eingreift. Alternativ oder zusätzlich kann der zweite Befestigungsabschnitt als Steckabschnitt ausgebildet sein oder einen Steckabschnitt aufweisen, der, insbesondere passgenau, in eine Steckausnehmung des Getriebebauteilelements eingreift. Insbesondere kann vorteilhaft vorgesehen sein, dass der jeweilige Steckabschnitt axial oder radial in die Steckausnehmung des Getriebebauteilelements eingreift. Bei einer solchen Ausführung ist die jeweilige Steckverbindung weitestgehend von den bei Belastung des Getriebes in Umfangsrichtung wirkenden Kräften entkoppelt, so dass ein ungewolltes Lösen der Steckverbindung verhindert ist.

Ganz allgemein kann vorteilhaft vorgesehen sein, dass der Verbinder wenigstens einen Druckabschnitt aufweist, der durch das von dem Getriebebauteil übertragene und/oder abgestützte Drehmoment auf Druck, insbesondere ausschließlich auf Druck, belastet wird. Eine solche Ausführung ermöglicht es beispielsweise, die Druckkräfte zu messen und aus den gemessenen Druckkräften auf das über das Getriebebauteil übertragene Drehmoment zu schließen. Der Druckabschnitt kann insbesondere als Druckstab ausgebildet sein. Der Druckstab kann seinerseits durch einen Schenkel des Verbinders, insbesondere einen von mehreren Schenkeln des Verbinders, gebildet sein.

Ebenfalls ganz allgemein kann vorteilhaft vorgesehen sein, dass der Verbinder wenigstens einen Zugabschnitt aufweist, der durch das von dem Getriebebauteil übertragene und/oder abgestützte Drehmoment auf Zug, insbesondere ausschließlich auf Zug, belastet wird. Eine solche Ausführung ermöglicht es beispielsweise, die Zugkräfte zu messen und aus den gemessenen Zugkräften auf das über das Getriebebauteil übertragene Drehmoment zu schließen. Der Zugabschnitt kann insbesondere als Zugstab ausgebildet sein. Der Zugstab kann seinerseits durch einen Schenkel des Verbinders, insbesondere einen von mehreren Schenkeln des Verbinders, gebildet sein.

Bei einer ganz besonders vorteilhaften Ausführung weist der Verbinder wenigstens einen Druckabschnitt und wenigstens einen Zugabschnitt auf. Eine solche Ausführung ermöglicht es beispielsweise, die Druckkräfte und die Zugkräfte zu messen und aus den gemessenen Druckkräften und den gemessenen Zugkräften auf das über das Getriebebauteil übertragene und/oder abgestützte Drehmoment zu schließen. Eine solche Drehmomentmessung ist besonders genau und robust gegenüber Störgrößen.

Ein einheitlicher und ausschließlicher Typ von auf den Verbinder wirkenden Belastungen, nämlich vorzugsweise ausschließlich Zug- und/oder Druckbelastungen, ist besonders Vorteilhaft, um bei der Auswertung der Messsignale Störgrößen ausschließen zu können.

Insbesondere kann vorgesehen sein, dass ein Abschnitt des Verbinders bei einer Rotationsrichtung einer Welle des Getriebes, beispielsweise der Antriebswelle des Getriebes, den Druckabschnitt und bei einer entgegengesetzten Rotationsrichtung der Welle den Zugabschnitt bildet.

Der Verbinder kann vorteilhaft einen u-förmigen Querschnitt aufweisen. Eine solche Ausführung erlaubt es beispielsweise, einen der Schenkel des im Querschnitt u-förmigen Verbinders, insbesondere axial oder radial, zum Zwecke der Befestigung in eine erste Steckausnehmung des ersten Getriebebauteilelements, insbesondere klemmend und/oder passgenau, einzustecken und den anderen Schenkel des im Querschnitt u-förmigen Verbinders, insbesondere axial oder radial, zum Zwecke der Befestigung in eine zweite Steckausnehmung des zweiten Getriebebauteilelements, insbesondere klemmend und/oder passgenau, einzustecken.

Der Verbinder kann vorteilhaft, insbesondere in einer zur Rotationsachse des Wellengenerators senkrechten Ebene, einen s-förmigen Querschnitt oder einen x-förmigen Querschnitt oder einen v-förmigen Querschnitt aufweisen. Beispielsweise können bei einer solchen Ausführung axiale Steckzapfen vorhanden sein, die zum Zwecke der Befestigung in axiale Steckausnehmungen des ersten und/oder zweiten Getriebebauteilelements eingesteckt werden.

Bei einer ganz besonders vorteilhaften Ausführung ist der Verbinder derart ausgebildet, dass, insbesondere je nach Vorzeichen des Drehmomentes, wenigstens ein Schenkel des Verbinders der Zugabschnitt und wenigstens ein weiterer Schenkel des Verbinders der Druckabschnitt ist. Eine solche Ausführung ist besonders präzise und erlaubt eine genaue Drehmomentmessung, wenn die Schenkel als Teil eines Verformungssensors fungieren, wobei beispielsweise auf die einzelnen Schenkel jeweils zumindest ein Dehnungsmessstreifen aufgeklebt sein kann. Es können jedoch alternativ oder zusätzlich zu wenigstens einem Dehnungsmessstreifen auch andere Messmittel, beispielsweise ein piezobasierter Längenmesssensor, zum Erfassen der Verformung des Verbinders vorhanden sein.

In Bezug auf die Richtung des Drehmoments gilt üblicherweise die Konvention, dass ein im Uhrzeigersinn wirkendes Drehmoment als negativ und ein gegen den Uhrzeigersinn wirkendes Drehmoment als positiv betrachtet wird. Diese Festlegung basiert auf der sogenannten Rechte-Hand-Regel: Wenn man die Finger der rechten Hand in Richtung der Drehbewegung krümmt, zeigt der Daumen in die Richtung des positiven Drehmoments entlang der Drehachse.

Der Verbinder kann ganz allgemein vorteilhaft wenigstens zwei Schenkel aufweisen, insbesondere wobei einer der Schenkel den Druckabschnitt und der andere den Zugabschnitt bildet.

Wie bereits erwähnt, kann der wenigstens eine Verbinder als Sensor ausgebildet sein oder Teil eines Sensors sein.

Bei einer solchen Ausführung ist es insbesondere ermöglicht, die elastisch bewegliche Verbindung des ersten Getriebebauteilelements mit dem zweiten Getriebebauteilelement für eine Kraft- und/oder Drehmomentmessung zu nutzen. Hierbei kann der Verbinder, insbesondere ein Verformungsabschnitt des Verbinders, als Teil eines Kraftmesssensors fungieren, wobei die jeweilige Verformung beispielsweise mittels Dehnungsmessstreifen erfasst werden kann, die an dem Verbinder angebracht, insbesondere aufgeklebt, sind.

Es ist allerdings auch möglich, dass der Sensor als Temperatursensor oder als Vibrationssensor ausgebildet ist.

Das Getriebe oder ein mit dem Getriebe ausgerüsteter Aktuator können eine, insbesondere elektronischer, Auswertevorrichtung aufweisen, an die der Sensor bzw. die mehreren Sensoren angeschlossen sind. Insbesondere kann vorgesehen sein, dass die Auswertevorrichtung Messsignale des Sensors bzw. der mehreren Sensoren empfängt. Die Auswertevorrichtung kann die Messsignale weiterverarbeiten und beispielsweise Ausgabesignale erzeugen, die weiterverarbeitet und/oder dem Benutzer beispielsweise über ein Display angezeigt werden können. Die Ausgabesignale können beispielsweise einen (insbesondere auf eine Einheit wie Nm bezogenen) Drehmomentwert oder einen (insbesondere auf eine Einheit wie Grad Celsius bezogene) Temperatur betreffen. Alternativ oder zusätzlich kann vorgesehen sein, dass die Auswertevorrichtung den Sensor bzw. die Sensoren mit elektrischer Energie versorgt.

Bei einer ganz besonders vorteilhaften Ausführung weist das Getriebe mehrere Verbinder mit unterschiedlichen Sensoren auf. Beispielsweise kann das erfindungsgemäße Getriebe einen Drehmomentsensor, einen Temperatursensor und einen Vibrationssensor aufweisen. Hierbei kann insbesondere vorteilhaft vorgesehen sein, dass die einzelnen Verbinder, die die unterschiedlichen Sensoren aufweisen, hinsichtlich Form und Größe gleich ausgebildet und insoweit mechanisch alle auf dieselbe Weise an dem ersten Getriebebauteilelement und dem zweiten Getriebebauteilelement des Getriebes befestigt sein können. Auf diese Weise kann durch die entsprechende Auswahl einer individuellen Kombination unterschiedlicher Verbinder die jeweils gewünschte Konfiguration des herzustellenden Getriebes einfach und effizient realisiert werden.

Beispielsweise können mehrere Verbinder derart angeordnet sein, dass die Abstände unmittelbar benachbarter Verbinder gleich sind. Insbesondere kann vorteilhaft vorgesehen sein, dass die Abstände aller unmittelbar benachbarter Verbinder gleich sind.

Es ist allerdings alternativ auch möglich, dass mehrere Verbinder derart angeordnet sind, dass die Abstände unmittelbar benachbarter Verbinder ungleich sind.

Bei einer ganz besonders sicheren Ausführung des erfindungsgemäßen Getriebes ist der wenigstens eine Verbinder dazu ausgebildet, zu brechen, und/oder ist die Befestigung des Verbinders mit dem Getriebebauteilelement dazu ausgebildet, sich zu lösen, wenn das Drehmoment einen vorgegebenen Wert übersteigt. Auf diese Weise wird vorteilhaft erreicht, dass die übrigen Bauteile des Getriebes im Überlastfall nicht beschädigt werden und das Getriebe durch einen vergleichsweise einfachen Austausch des gebrochenen Verbinders (falls mehrere vorhanden: der gebrochenen Verbinder) bzw. durch ein Wiederherstellen der gelösten Verbindung (falls mehrere vorhanden: der gelösten Verbindungen) einfach und kostengünstig wieder funktionstüchtig gemacht werden kann.

Alternativ kann der wenigstens eine Verbinder, insbesondere wenn er mit einem Sensor ausgerüstet ist, derart ausgebildet sein, dass ein anderes Bauteil des Getriebes bei einer Überlastung versagt, bevor der Verbinder beschädigt wird. Auf diese Weise ist gewährleistet, dass ein teurer Verbinder nach einer Überlastung des Getriebes wiederverwendet werden kann.

Das Getriebebauteil und/oder das erste Getriebebauteilelement und/oder das zweite Getriebebauteilelement können vorteilhaft ringförmig ausgebildet sein. Beispielsweise kann es sich bei einem Getriebebauteil, welches das erste und das zweite Getriebebauteilelement aufweist, um ein verzahntes, insbesondere innenverzahntes, Hohlrad, insbesondere eines Spannungswellengetriebes oder eines Planetengetriebes, handeln.

Bei einer vorteilhaften Ausführung weist das erste Getriebebauteilelement eine Verzahnung auf. Alternativ oder zusätzlich kann das zweite Getriebebauteilelement eine Verzahnung aufweisen. Insbesondere kann es sich bei dem Getriebebauteil, welches das erste und das zweite Getriebebauteilelement aufweist, um ein Zahnrad und/oder eine Welle handeln.

Bei einer vorteilhaften Ausführung sind das erste Getriebebauteilelement und/oder das zweite Getriebebauteilelement Teil eines Lagers, mittels dem eine Getriebewelle rotierbar gelagert ist. Bei einer besonders vorteilhaften Ausführung ist ein Getriebebauteil, welches das erste und das zweite Getriebebauteilelement aufweist, Teil eines Lagers, mittels dem eine Getriebewelle rotierbar gelagert ist. Beispielsweise können das Getriebebauteil, erste Getriebebauteilelement oder das zweite Getriebebauteilelement ein Außenring oder ein Innenring eines Wälz- oder Gleitlagers sein. Das Wälzlager kann insbesondere ein Kugellager, ein doppelreihiges Wälzlager oder ein Kreuzrollenlager sein.

Das erste Getriebebauteilelement oder das zweite Getriebebauteilelement können als Getriebegehäuse ausgebildet sein oder Teil eines Getriebegehäuses sein.

Das erfindungsgemäße Getriebe kann beispielsweise ein Planetengetriebe oder ein Zykloidgetriebe sein.

Insbesondere kann das erfindungsgemäße Getriebe ein Spannungswellengetriebe sein. Bei einer solchen Ausführung können das erste Getriebebauteilelement oder das zweite Getriebebauteilelement Teile eines Circularsplines oder eines Dynamicsplines oder eines Flexsplines oder eines Wellengeneratoreinsatzes ein. Insbesondere kann ein Getriebebauteil, welches das erste und das zweite Getriebebauteilelement aufweist, vorteilhaft ein Circularspline oder ein Dynamicspline oder ein Flexspline oder ein Wellengeneratoreinsatz sein.

In ganz besonders vorteilhafter Weise kann das Getriebe als ein Dreiwellengetriebe ausgebildet sein, bei dem eine rotierbar gelagerte erste Welle als Getriebeantrieb fungiert, eine rotierbar gelagerte zweite Welle als Getriebeabtrieb fungiert und eine dritte Welle, insbesondere relativ zu dem Getriebegehäuse, drehfest gehalten ist.

Ganz besonders vorteilhaft ist es, wenn die Anzahl der Verbinder ohne strukturelle Veränderung des ersten Getriebebauteilelements und/oder des zweiten Getriebebauteilelements, vorzugsweise werkzeugfrei, veränderbar ist. Dies hat den ganz besonderen Vorteil, dass das erste Getriebebauteilelement und das zweite Getriebebauteilelement bei der Herstellung des Getriebes mit einer höheren Anzahl von Verbindern miteinander verbunden werden können, wenn eine höhere Drehsteifigkeit des ersten Getriebebauteilelements relativ zu dem zweiten Getriebebauteilelement gewünscht ist, und dass alternativ das erste Getriebebauteilelement und das zweite Getriebebauteilelement mit einer niedrigeren Anzahl von Verbindern miteinander verbunden werden, wenn eine niedrigere Drehsteifigkeit des ersten Getriebebauteilelements relativ zu dem zweiten Getriebebauteilelement gewünscht ist. Auf diese Weise sind ganz effizient Getriebe mit unterschiedlichen Eigenschaften herstellbar.

Insbesondere hierfür kann vorteilhaft vorgesehen sein, dass das Getriebe mehrere gleich ausgebildete Verbinder aufweist, oder dass das Getriebe zumindest mehrere hinsichtlich Größe und Form gleich ausgebildete Verbinder aufweist. Es ist vorteilhaft möglich, dass das Getriebe mehrere hinsichtlich Größe und Form gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Es ist vorteilhaft insbesondere möglich, dass das Getriebe mehrere hinsichtlich Größe und Form und Anordnung der Befestigungsabschnitte gleich ausgebildete Verbinder aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden. Die Gleichheit von Größe und Form und Anordnung der Befestigungsabschnitte ermöglicht es, individuell Verbinder mit unterschiedlichen Eigenschaften und/oder Sensoren zu verwenden, ohne eine strukturelle Veränderung des ersten Getriebebauteilelements und/oder des zweiten Getriebebauteilelements vornehmen zu müssen.

Gemäß der Erfindung ist es beispielsweise möglich, dass die Anzahl der verwendeten Verbinder wenigstens eines der herzustellenden Getriebe kleiner ist als die Anzahl der Gegenbefestigungsabschnitte des ersten Getriebebauteilelements und/oder kleiner als die Anzahl der weiteren Gegenbefestigungsabschnitte des zweiten Getriebebauteilelements dieses Getriebes. Wenn weniger Verbinder eingesetzt werden als aufgrund der Anzahl der Gegenbefestigungsabschnitte maximal möglich ist, kann eine geringere Torsionssteifigkeit erreicht werden, falls dies anwendungsbedingt gewünscht ist.

Alternativ oder zusätzlich kann vorteilhaft vorgesehen sein, dass bei wenigstens einem der herzustellenden Getriebe die Anzahl der verwendeten Verbinder, die einen Sensor aufweisen, kleiner ist als die Gesamtanzahl an Verbindern, oder dass bei wenigstens einem der herzustellenden Getriebe die Anzahl der verwendeten Verbinder, die Sensoren derselben Art aufweisen, kleiner ist als die Gesamtanzahl an Verbindern.

Der wenigstens eine Verbinder kann, insbesondere, wenn er mit einem Sensor ausgerüstet ist, wenigstens eine elektrische Schnittstelle zum Übertragen von Energie und/oder Messsignalen und/oder Daten aufweisen. Über die Schnittstelle, die beispielsweise einen Stecker oder eine Steckbuchse aufweisen kann, können beispielsweise die Energie zum Betreiben des Sensors und/oder Messsignale übertragen werden. Die Schnittstelle kann beispielsweise mehrere Einzelleitungen umfassen, um getrennt voneinander Energie, Messsignalen und/oder Daten zu übertragen.

Insbesondere hierbei kann vorteilhaft vorgesehen sein, dass das erste Getriebebauteilelement und/oder das zweite Getriebebauteilelement eine elektrische Gegenschnittstelle zur Ankopplung an die elektrische Schnittstelle aufweisen. Auf diese Weise ist es ermöglicht, Energie, Messsignalen und/oder Daten über elektrische Leitungen des ersten bzw. zweiten Getriebebauteilelements beispielsweise zu einer Steuerungsvorrichtung und/oder zu einer Auswertevorrichtung weiter zu leiten.

Beispielsweise kann die Gegenschnittstelle eine zu einem Stecker der Schnittstelle passende Steckbuchse aufweisen, in die der Stecker einsteckbar ist. Es ist beispielsweise auch möglich, dass die Gegenschnittstelle einen zu einer Steckbuchse der Schnittstelle passenden Stecker aufweist, der die die Steckbuchse einsteckbar ist.

Bei einer ganz besonders vorteilhaften Ausführung koppeln die elektrische Schnittstelle und die elektrische Gegenschnittstelle automatisch miteinander, wenn der Verbinder an dem ersten Getriebebauteilelement bzw. dem zweiten Getriebebauteilelement befestigt wird. Bei dieser Ausführung wird durch das mechanische Ankoppeln des Verbinders an das erste Getriebebauteilelement bzw. zweite Getriebebauteilelement automatisch und ohne zusätzlichen Arbeitsschritt gleichzeitig auch die elektrische Ankopplung hergestellt, was den Zusammenbau erheblich erleichtert.

Ganz besonders vorteilhaft ist ein Aktuator, der einen Antriebsmotor und ein erfindungsgemäßes Getriebe, das dem Antriebsmotor triebtechnisch nachgeschaltet ist, aufweist.

Insbesondere kann der Aktuator eine Steuerungsvorrichtung aufweisen, die Sensorsignale von dem Getriebe, insbesondere von den als Sensoren ausgebildeten Verbindern, empfängt.

Bei einer ganz besonders vorteilhaften Ausführung ist die Steuerungsvorrichtung dazu ausgebildet, den Antriebsmotor in Abhängigkeit von dem Sensormesswert zu steuern oder zu regeln. Insbesondere kann die Steuerungsvorrichtung dazu ausgebildet sein, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird. Auf diese Weise kann eine Überlastung des Getriebes vermieden werden.

Von ganz besonderem Vorteil ist ein Roboter, insbesondere ein Industrieroboter, der wenigstens ein erfindungsgemäßes Getriebe oder einen erfindungsgemäßen Aktuator beinhaltet. Insbesondere kann das erfindungsgemäße Getriebe in einem Robotergelenk eingesetzt werden. Das Robotergelenk kann durch die Verwendung des erfindungsgemäßen Getriebes besonders vielseitig verwendet und überwacht werden.

Von ganz besonderem Vorteil ist ein Fahrwerk, insbesondere ein aktives Fahrwerk, für ein Kraftfahrzeug, das wenigstens ein erfindungsgemäßes Getriebe oder einen erfindungsgemäßen Aktuator aufweist. Ein ganz besonderer Vorteil ist es hierbei, dass ein hoher Überlastungsschutz und eine zuverlässige Überwachung des Getriebes einfach realisierbar ist, was die Fahrsicherheit erhöht. Von ganz besonderem Vorteil ist eine Lenkung, insbesondere PKW-Lenkung oder LKW-Lenkung, die wenigstens ein erfindungsgemäßes Getriebe aufweist. Die Lenkung kann insbesondere eine Servolenkung und/oder eine Überlagerungslenkung sein.

Das erfindungsgemäße Verfahren kann insbesondere vorteilhaft beinhalten, dass die Verbinder jeweils zerstörungsfrei lösbar an dem ersten Getriebebauteilelement und/oder dem zweiten Getriebebauteilelement befestigt werden. Eine solche Ausführung ist ganz besonders flexibel verwendbar, insbesondere im Hinblick auf eine spätere Umrüstung des Getriebes. Beispielsweise kann ein Verbinder, der keinen Sensor aufweist, bei einer solchen Ausführung einfach gegen einen Verbinder, der einen Sensor aufweist oder als Sensor ausgebildet ist, ausgetauscht werden.

Das erfindungsgemäße Verfahren kann vorteilhaft beinhalten, dass jedes der bereitgestellten ersten Getriebebauteilelemente mehrere erste Gegenbefestigungsabschnitte aufweist, von denen jeder dazu ausgebildet ist, mit dem ersten Befestigungsabschnitt eines, insbesondere jedes, der bereitgestellten Verbinder zusammen zu wirken, und dass jedes der bereitgestellten zweiten Getriebebauteilelemente mehrere zweite Gegenbefestigungsabschnitte aufweist, von denen jeder dazu ausgebildet ist, mit dem zweiten Befestigungsabschnitt eines, insbesondere jedes, der bereitgestellten Verbinder zusammen zu wirken. Auf diese Weise sind ganz unterschiedliche Kombinationen realisierbar, die eine unterschiedliche Anzahl und/oder Anordnung von Verbindern aufweisen, wobei sich zusätzlich noch wenigstens zwei der Verbinder hinsichtlich ihrer Art (mit Sensor oder ohne Sensor oder hinsichtlich der Art des Sensors) voneinander unterscheiden können. Insbesondere ist es hier möglich, dass die Anzahl der verwendeten Verbinder wenigstens eines der herzustellenden Getriebe kleiner ist als die Anzahl der ersten Gegenbefestigungsabschnitte des ersten Getriebebauteilelements und/oder kleiner als die Anzahl der zweiten Gegenbefestigungsabschnitte des zweiten Getriebebauteilelements dieses Getriebes. Alternativ oder zusätzlich ist es ermöglicht, dass bei wenigstens einem der herzustellenden Getriebe die Anzahl der verwendeten Verbinder, die einen Sensor aufweisen, kleiner ist, als die Gesamtanzahl an Verbindern, oder dass bei wenigstens einem der herzustellenden Getriebe die Anzahl der verwendeten Verbinder, die Sensoren derselben Art aufweisen, kleiner ist, als die Gesamtanzahl an Verbindern.

Ganz allgemein ist ein eine Vorrichtung, insbesondere ein Getriebe, bzw. ein Verfahren besonders vorteilhaft, das (insbesondere auch in Kombination mit wenigstens einem der vorstehend genannten Aspekte) wenigstens einen der folgenden Aspekte aufweist:
1. Getriebe mit einem ersten Getriebebauteilelement (3) und einem zweiten Getriebebauteilelement (4), die mittels wenigstens eines Verbinders, der an dem ersten Getriebebauteilelement (3) und an dem zweiten Getriebebauteilelement (4) befestigt ist, elastisch beweglich, insbesondere relativ zueinander drehbar, miteinander verbunden sind, dadurch gekennzeichnet, dass das erste Getriebebauteilelement (3) und das zweite Getriebebauteilelement (4) derart ausgebildet sind, dass die Anzahl und/oder die Anordnung und/oder die Art der das erste Getriebebauteilelement (3) und das zweite Getriebebauteilelement (4) verbindenden Verbinder ohne strukturelle Veränderung des ersten Getriebebauteilelements und/oder des zweiten Getriebebauteilelements, insbesondere werkzeugfrei, veränderbar ist.
2. Getriebe nach Aspekt 1, dadurch gekennzeichnet, dass jeder Verbinder einen ersten Befestigungsabschnitt (28) aufweist, mittels dem er an dem ersten Getriebebauteilelement (3) befestigt ist, und einen zweiten Befestigungsabschnitt (31) aufweist, mittels dem er an dem zweiten Getriebebauteilelement (4) befestigt ist.
3. Getriebe nach Aspekt 2, dadurch gekennzeichnet, dass das erste Getriebebauteilelement (3) mehrere erste Gegenbefestigungsabschnitte aufweist, von denen jeder dazu ausgebildet ist, mit dem ersten Befestigungsabschnitt (28) zusammen zu wirken, und dass das zweite Getriebebauteilelement (4) mehrere zweite Gegenbefestigungsabschnitte aufweist, von denen jeder dazu ausgebildet ist, mit dem zweiten Befestigungsabschnitt (31) zusammen zu wirken.
4. Getriebe nach einem der Aspekte 1 bis 3, dadurch gekennzeichnet, dass das erste Getriebebauteilelement (3) und das zweite Getriebebauteilelement (4) zusammen mit den sie verbindenden Verbindern ein Getriebebauteil (1) bilden, welches ein Drehmoment überträgt oder ein Drehmoment abstützt.
5. Getriebe nach einem der Aspekte 1 bis 4, dadurch gekennzeichnet, dass die Befestigung des Verbinders (5) mit dem ersten Getriebebauteilelement (3) und/oder dem zweiten Getriebebauteilelement (4) eine kraftschlüssige Verbindung aufweist oder als ausschließlich kraftschlüssige Verbindung ausgebildet ist.
6. Getriebe nach einem der Aspekte 1 bis 5, dadurch gekennzeichnet, dass die Befestigung des Verbinders (5) mit dem ersten Getriebebauteilelement (3) und/oder dem zweiten Getriebebauteilelement (4) eine formschlüssige Verbindung aufweist oder als ausschließlich formschlüssige Verbindung ausgebildet ist.
7. Getriebe nach einem der Aspekte 1 bis 6, dadurch gekennzeichnet, dass die Befestigung des Verbinders (5) mit dem ersten Getriebebauteilelement (3) und/oder dem zweiten Getriebebauteilelement (4) zerstörungsfrei lösbar ausgebildet ist.
8. Getriebe nach einem der Aspekte 2 bis 7, dadurch gekennzeichnet, dass a. der erste Befestigungsabschnitt als Steckabschnitt (13) ausgebildet ist oder einen Steckabschnitt (13) aufweist, und dass der erste Gegenbefestigungsabschnitt eine Steckausnehmung (14) ist oder eine Steckausnehmung (14) aufweist, in die der Steckabschnitt (13), insbesondere passgenau, eingreift, und/oder dass b. der zweite Befestigungsabschnitt als Steckabschnitt (13) ausgebildet ist oder einen Steckabschnitt (13) aufweist, und dass der zweite Gegenbefestigungsabschnitt eine Steckausnehmung (14) ist oder eine Steckausnehmung (14) aufweist, in die der Steckabschnitt (13), insbesondere passgenau, eingreift.
9. Getriebe nach Aspekt 8, dadurch gekennzeichnet, dass der Steckabschnitt (13) axial oder radial in die Steckausnehmung (14) des Getriebebauteilelements (3, 4) eingreift.
10. Getriebe nach einem der Aspekte 1 bis 9, dadurch gekennzeichnet, dass der Verbinder (5) wenigstens einen Druckabschnitt aufweist, der im Betrieb des Getriebes, insbesondere durch das übertragene oder abgestützte Drehmoment, auf Druck belastet wird.
11. Getriebe nach Aspekt 10, dadurch gekennzeichnet, dass der Druckabschnitt durch einen Druckstab des Verbinders gebildet ist.
12. Getriebe nach einem der Aspekte 1 bis 11, dadurch gekennzeichnet, dass der Verbinder (5) wenigstens einen Zugabschnitt aufweist, der im Betrieb des Getriebes, insbesondere durch das übertragene oder abgestützte Drehmoment, auf Zug belastet wird.
13. Getriebe nach Aspekt 12, dadurch gekennzeichnet, dass der Zugabschnitt durch einen Zugstab des Verbinders gebildet ist.
14. Getriebe nach einem der Aspekte 1 bis 13, dadurch gekennzeichnet, dass der Verbinder (5) einen u-förmigen Querschnitt oder einen s-förmigen Querschnitt oder einen x-förmigen Querschnitt oder einen v-förmigen Querschnitt aufweist.
15. Getriebe nach Aspekt 14, dadurch gekennzeichnet, dass, insbesondere je nach Vorzeichen des Drehmomentes, wenigstens ein Schenkel des Verbinders (5) der Zugabschnitt und ein weiterer Schenkel des Verbinders (5) der Druckabschnitt ist.
16. Getriebe nach einem der Aspekte 1 bis 15, dadurch gekennzeichnet, dass der Verbinder (5) als Sensor ausgebildet ist oder Teil eines Sensors ist.
17. Getriebe nach Aspekt 16, dadurch gekennzeichnet, dass der Sensor als Temperatursensor ausgebildet ist.
18. Getriebe nach Aspekt 16, dadurch gekennzeichnet, dass der Sensor als Vibrationssensor ausgebildet ist.
19. Getriebe nach Aspekt 16, dadurch gekennzeichnet, dass der Sensor als Verformungssensor ausgebildet ist.
20. Getriebe nach Aspekt 16, dadurch gekennzeichnet, dass der Sensor wenigstens einen Dehnungsmesstreifen (16) aufweist.
21. Getriebe nach Aspekt 19 oder 20, dadurch gekennzeichnet, dass der Verbinder (5) einen elastisch verformbaren Verformungsabschnitt (15) aufweist.
22. Getriebe nach den Aspekten 20 und 21, dadurch gekennzeichnet, dass der wenigstens eine Dehnungsmesstreifen (16) dazu ausgebildet und angeordnet ist, eine Verformung des Verformungsabschnittes (15) zu erfassen.
23. Getriebe nach einem der Aspekte 1 bis 22, dadurch gekennzeichnet, dass mehrere Verbinder (5) derart angeordnet sind, dass die Abstände unmittelbar benachbarter Verbinder (5) gleich sind.
24. Getriebe nach Aspekt 23, dadurch gekennzeichnet, dass die Abstände aller unmittelbar benachbarter Verbinder (5) gleich sind.
25. Getriebe nach einem der Aspekte 1 bis 23, dadurch gekennzeichnet, dass mehrere Verbinder (5) derart angeordnet sind, dass die Abstände unmittelbar benachbarter Verbinder (5) ungleich sind.
26. Getriebe nach einem der Aspekte 1 bis 25, dadurch gekennzeichnet, dass der wenigstens eine Verbinder (5) dazu ausgebildet ist zu brechen und/oder die Befestigung des Verbinders (5) mit dem Getriebebauteilelement (3, 4) dazu ausgebildet ist sich zu lösen, wenn das Drehmoment einen vorgegebenen Wert übersteigt.
27. Getriebe nach einem der Aspekte 1 bis 26, dadurch gekennzeichnet, dass das erste Getriebebauteilelement (3) und/oder das zweite Getriebebauteilelement (4) ringförmig ausgebildet sind.
28. Getriebe nach einem der Aspekte 1 bis 27, dadurch gekennzeichnet, dass das erste Getriebebauteilelement (3) eine Verzahnung aufweist und/oder das zweite Getriebebauteilelement (4) eine Verzahnung aufweist.
29. Getriebe nach einem der Aspekte 1 bis 28, dadurch gekennzeichnet, dass das erste Getriebebauteilelement (3) und/oder das zweite Getriebebauteilelement (4) Teil eines Lagers ist, mittels dem eine Getriebewelle rotierbar gelagert ist.
30. Getriebe nach einem der Aspekte 1 bis 28, dadurch gekennzeichnet, dass das erste Getriebebauteilelement (3) oder das zweite Getriebebauteilelement (4) als Getriebegehäuse (25) ausgebildet ist oder Teil eines Getriebegehäuses (25) ist.
31. Getriebe nach einem der Aspekte 1 bis 30, dadurch gekennzeichnet, dass das Getriebe ein Planetengetriebe oder ein Zykloidgetriebe ist.
32. Getriebe nach einem der Aspekte 1 bis 30, dadurch gekennzeichnet, dass das Getriebe ein Spannungswellengetriebe ist.
33. Getriebe nach Aspekt 31, dadurch gekennzeichnet, dass das erste Getriebebauteilelement (3) oder das zweite Getriebebauteilelement (4) Teile eines Circularsplines (2) oder eines Dynamicsplines oder eines Flexsplines (6) oder eines Wellengeneratoreinsatzes sind.
34. Getriebe nach einem der Aspekte 4 bis 33, dadurch gekennzeichnet, dass das Getriebebauteil (1) ein Circularspline (2) oder ein Dynamicspline oder ein Flexspline (6) ist.
35. Getriebe nach einem der Aspekte 1 bis 34, dadurch gekennzeichnet, dass das Getriebe als ein Dreiwellengetriebe ausgebildet ist, bei dem eine rotierbar gelagerte erste Welle als Getriebeantrieb, eine rotierbar gelagerte zweite Welle als Getriebeabtrieb und eine dritte Welle, insbesondere relativ zu dem Getriebegehäuse, drehfest gehalten ist.
36. Getriebe nach einem der Aspekte 1 bis 35, dadurch gekennzeichnet, dass die Anzahl der Verbinder (5) ohne strukturelle Veränderung ersten Getriebebauteilelements (3) und/oder des zweiten Getriebebauteilelements (4), insbesondere werkzeugfrei, veränderbar ist.
37. Getriebe nach einem der Aspekte 1 bis 36, dadurch gekennzeichnet, dass
   a. das Getriebe mehrere gleich ausgebildete Verbinder (5) aufweist, oder dass
   b. das Getriebe mehrere hinsichtlich Größe und Form gleich ausgebildete Verbinder (5) aufweist, oder dass
   c. das Getriebe mehrere hinsichtlich Größe und Form und Anordnung der Befestigungsabschnitte gleich ausgebildete Verbinder (5) aufweist, oder dass
   d. das Getriebe mehrere hinsichtlich Größe und Form gleich ausgebildete Verbinder (5) aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden, oder dass
   e. das Getriebe mehrere hinsichtlich Größe und Form und Anordnung der Befestigungsabschnitte gleich ausgebildete Verbinder (5) aufweist, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden.
38. Getriebe nach einem der Aspekte 1 bis 36, dadurch gekennzeichnet, dass das erste Getriebebauteilelement (3) oder das zweite Getriebebauteilelement (4)
   a. mittels mehrerer gleich ausgebildeter Verbinder (5) miteinander verbunden sind, oder
   b. mittels mehrerer hinsichtlich Größe und Form gleich ausgebildeter Verbinder (5) miteinander verbunden sind, oder
   c. mittels mehrerer hinsichtlich der Größe und Form und Anordnung der Befestigungsabschnitte (28, 31) gleich ausgebildeter Verbinder (5) miteinander verbunden sind, oder
   d. mittels mehrerer hinsichtlich Größe und Form gleich ausgebildeter Verbinder (5) miteinander verbunden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden, oder
   e. mittels mehrerer hinsichtlich Größe und Form und Anordnung der Befestigungsabschnitte gleich ausgebildeter Verbinder (5) miteinander verbunden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden.
39. Getriebe nach einem der Aspekte 1 bis 38, dadurch gekennzeichnet, dass die Anzahl der verwendeten Verbinder (5) wenigstens eines der herzustellenden Getriebe kleiner ist als die Anzahl der Gegenbefestigungsabschnitte des ersten Getriebebauteilelements (3) und/oder kleiner als die Anzahl der weiteren Gegenbefestigungsabschnitte des zweiten Getriebebauteilelements (4) dieses Getriebes.
40. Getriebe nach einem der Aspekte 1 bis 39, dadurch gekennzeichnet, dass
   a. die Anzahl der Verbinder (5), die einen Sensor aufweisen, kleiner ist als die Gesamtanzahl an Verbindern (5), oder dass
   b. die Anzahl der Verbinder (5), die Sensoren derselben Art aufweisen, kleiner ist als die Gesamtanzahl an Verbindern (5).
41. Getriebe nach einem der Aspekte 1 bis 40, dadurch gekennzeichnet, dass der Verbinder wenigstens eine elektrische Schnittstelle zum Übertragen von Energie und/oder Messsignalen und/oder Daten aufweist.
42. Getriebe nach Aspekt 41, dadurch gekennzeichnet, dass das erste Getriebebauteilelement (3) und/oder das zweite Getriebebauteilelement (4) eine elektrische Gegenschnittstelle zur Ankopplung an die elektrische Schnittstelle aufweisen.
43. Getriebe nach Aspekt 41 und 42, dadurch gekennzeichnet, dass die elektrische Schnittstelle und die elektrische Gegenschnittstelle automatisch miteinander koppeln, wenn der Verbinder (5) an dem ersten Getriebebauteilelement (3) bzw. dem zweiten Getriebebauteilelement (4) befestigt wird.
44. Set von Verbindern (5) für ein Getriebe nach einem der Aspekte 2 bis 43, dadurch gekennzeichnet, dass die Verbinder (5) hinsichtlich Größe und Form und Anordnung der ersten Befestigungsabschnitte (28) und zweiten Befestigungsabschnitte (31) gleich ausgebildet sind und sich wenigstens zwei der Verbinder (5) hinsichtlich wenigstens einer Eigenschaft voneinander unterscheiden.
45. Set nach Aspekt 44, dadurch gekennzeichnet, dass die Eigenschaft die Elastizität, das Vorhandensein eines Sensors und/oder die Art des Sensors betrifft.
46. Aktuator beinhaltend einen Antriebsmotor und ein Getriebe nach einem der Aspekte 1 bis 43, das dem Antriebsmotor triebtechnisch nachgeschaltet ist.
47. Aktuator nach Aspekt 46, dadurch gekennzeichnet, dass eine Steuerungsvorrichtung vorhanden ist, die Sensorsignale von dem Getriebe empfängt.
48. Aktuator nach Aspekt 47, dadurch gekennzeichnet, dass die Steuerungsvorrichtung dazu ausgebildet ist, den Antriebsmotor in Abhängigkeit von dem Sensormesswert zu steuern oder zu regeln.
49. Aktuator nach Aspekt 47 oder 48, dadurch gekennzeichnet, dass die Steuerungsvorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.
50. Robotergelenk, welches wenigstens ein Getriebe nach einem der Aspekte 1 bis 43 und/oder einen Aktuator nach einem der Aspekte 46 bis 49 aufweist.
51. Roboter, der wenigstens ein Getriebe nach einem der Aspekte 1 bis 43 und/oder einen Aktuator nach einem der Aspekte 46 bis 49 aufweist.
52. Fahrwerk, insbesondere aktives Fahrwerk für ein Kraftfahrzeug, welches wenigstens ein Getriebe nach einem der Aspekte 1 bis 43 und/oder einen Aktuator nach einem der Aspekte 46 bis 49 aufweist.
53. Lenkung, insbesondere PKW-Lenkung oder LKW-Lenkung, die wenigstens ein Getriebe nach einem der Aspekte 1 bis 43 und/oder einen Aktuator nach einem der Aspekte 46 bis 49 aufweist.
54. Lenkung nach Aspekt 53, dadurch gekennzeichnet, dass die Lenkung eine Servolenkung und/oder eine Überlagerungslenkung ist.
55. Verfahren zum Herstellen von Getrieben, insbesondere von Getrieben, die nach einem der Aspekte 1 bis 43 ausgebildet sind, dadurch gekennzeichnet, dass
   a. eine Vielzahl von, insbesondere gleichen, ersten Getriebebauteilelementen (3) und, insbesondere gleichen, zweiten Getriebebauteilelementen (4) bereitgestellt werden, die jeweils mittels wenigstens eines Verbinders (5), der an dem ersten Getriebebauteilelement (3) und/oder an dem zweiten Getriebebauteilelement befestigbar ist, elastisch beweglich miteinander verbindbar sind, und dass
   b. eine Vielzahl von Verbindern (5) zum Verbinden jeweils eines der ersten Getriebebauteilelemente (3) mit einem der zweiten Getriebebauteilelemente (4) bereitgestellt werden, und dass
   c. für jedes der herzustellenden Getriebe jeweils eines der ersten Getriebebauteilelemente (3) mit einem der zweiten Getriebebauteilelemente (4) mittels wenigstens eines der Verbinder (5), der sowohl an dem ersten Getriebebauteilelement (3) als auch an dem zweiten Getriebebauteilelement (4) befestigt wird, derart verbunden werden, dass sich wenigstens zwei der Getriebe hinsichtlich der Anzahl und/oder der Anordnung und/oder der Art der das erste Getriebebauteilelement (3) und das zweite Getriebebauteilelement (4) verbindenden Verbinder (5) voneinander unterscheiden.
56. Verfahren nach Aspekt 55, dadurch gekennzeichnet, dass die Verbinder (5) jeweils zerstörungsfrei lösbar an dem ersten Getriebebauteilelement (3) und/oder dem zweiten Getriebebauteilelement (4) befestigt werden.
57. Verfahren nach Aspekt 55 oder 56, dadurch gekennzeichnet, dass die bereitgestellten Verbinder (5) hinsichtlich Größe und Form und Anordnung der ersten Befestigungsabschnitte (28) und zweiten Befestigungsabschnitte (31) gleich ausgebildet sind und sich hinsichtlich wenigstens einer Eigenschaft voneinander unterscheiden.
58. Verfahren nach Aspekt 57, dadurch gekennzeichnet, dass die Eigenschaft die Elastizität, das Vorhandensein eines Sensors und/oder die Art des Sensors betrifft.
59. Verfahren nach einem der Aspekte 55 bis 58, dadurch gekennzeichnet, dass jedes der bereitgestellten ersten Getriebebauteilelemente (3) mehrere erste Gegenbefestigungsabschnitte aufweist, von denen jeder dazu ausgebildet ist, mit dem ersten Befestigungsabschnitt (28) eines, insbesondere jedes, der bereitgestellten Verbinder (5) zusammen zu wirken, und dass jedes der bereitgestellten zweiten Getriebebauteilelemente (4) mehrere zweite Gegenbefestigungsabschnitte aufweist, von denen jeder dazu ausgebildet ist, mit dem zweiten Befestigungsabschnitt (31) eines, insbesondere jedes, der bereitgestellten Verbinder (5) zusammen zu wirken.
60. Verfahren nach Aspekt 59, dadurch gekennzeichnet, dass die Anzahl der verwendeten Verbinder (5) wenigstens eines der herzustellenden Getriebe kleiner ist als die Anzahl der ersten Gegenbefestigungsabschnitte des ersten Getriebebauteilelements (3) und/oder kleiner als die Anzahl der zweiten Gegenbefestigungsabschnitte des zweiten Getriebebauteilelements (4) dieses Getriebes.
61. Verfahren nach einem der Aspekte 55 bis 60, dadurch gekennzeichnet, dass
   a. bei wenigstens einem der herzustellenden Getriebe die Anzahl der verwendeten Verbinder (5), die einen Sensor aufweisen, kleiner ist, als die Gesamtanzahl an Verbindern (5), oder dass
   b. bei wenigstens einem der herzustellenden Getriebe die Anzahl der verwendeten Verbinder (5), die Sensoren derselben Art aufweisen, kleiner ist, als die Gesamtanzahl an Verbindern (5).

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Getriebes,
- Fig. 2: eine Detailansicht ersten Ausführungsbeispiels mit einer Blickrichtung entlang der Mittelachse, wobei das Getriebegehäuse 25 und die Getriebeabtriebswelle nicht dargestellt sind,
- Fig. 3: das Getriebebauteil des ersten Ausführungsbeispiels,
- Fig. 4: die Rückansicht eines der Verbinder für ein erfindungsgemäßes Getriebe gemäß dem ersten Ausführungsbeispiel,
- Fig. 5: die Vorderansicht eines der Verbinder für ein erfindungsgemäßes Getriebe gemäß dem ersten Ausführungsbeispiel,
- Fig. 6: eine Seitenansicht eines der Verbinder für ein erfindungsgemäßes Getriebe gemäß dem ersten Ausführungsbeispiel,
- Fig. 7: eine schematische Darstellung der Kräfteverteilung eines der Verbinder für ein erfindungsgemäßes Getriebe gemäß dem ersten Ausführungsbeispiel,
- Fig. 8: ein zweites Ausführungsbeispiel eines erfindungsgemäßen Getriebes,
- Fig. 9: die Rückansicht eines zweiten Ausführungsbeispiels eines Verbinders für ein erfindungsgemäßes Getriebe,
- Fig. 10: die Vorderansicht des zweiten Ausführungsbeispiels eines Verbinders für ein erfindungsgemäßes Getriebe,
- Fig. 11: eine Seitenansicht des zweiten Ausführungsbeispiels eines Verbinders für ein erfindungsgemäßes Getriebe,
- Fig. 12: ein drittes Ausführungsbeispiel eines erfindungsgemäßen Getriebes,
- Fig. 13: eine perspektivische Detailansicht eines der Verbinder des dritten Ausführungsbeispiels eines erfindungsgemäßen Getriebes, und
- Fig. 14: ein viertes Ausführungsbeispiel eines erfindungsgemäßen Getriebes.

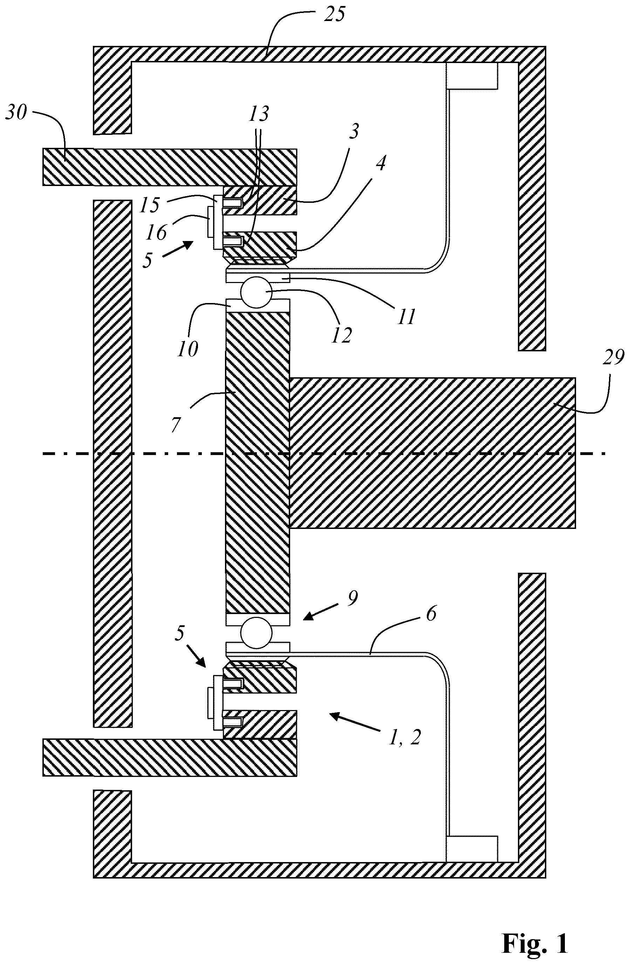

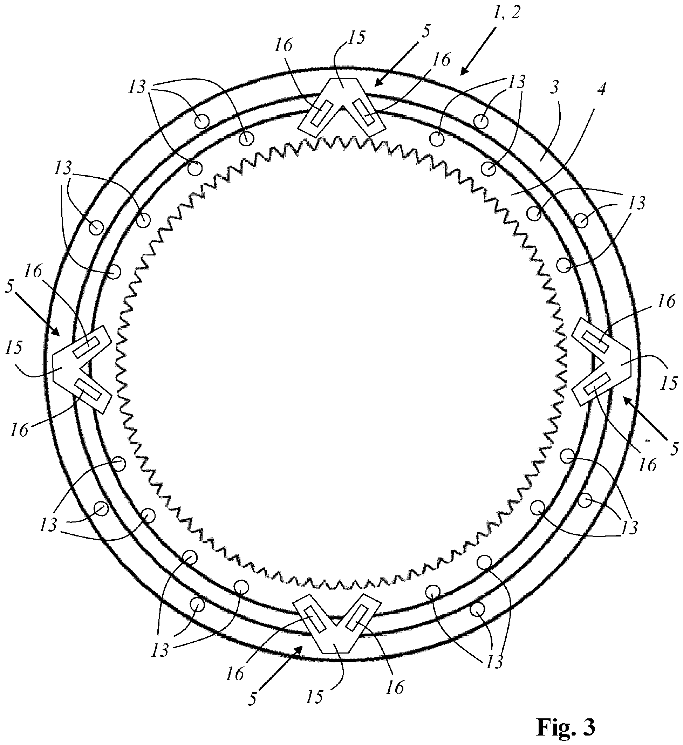

Figur 1 zeigt ein erstes Ausführungsbeispiel eines erfindungsgemäßen Getriebes, das als Spannungswellengetriebe ausgebildet ist. Das Spannungswellengetriebe hat ein Getriebegehäuse 25 und hat ein Getriebebauteil 1, nämlich einen Circularspline 2, welches ein Drehmoment überträgt oder ein Drehmoment abstützt. Das Getriebebauteil 1 (Circularspline 2) ist in Figur 3 separat dargestellt. Der Circularspline 2 ist mit einer Getriebeabtriebswelle 30 drehfest verbunden, die als Hohlwelle ausgebildet ist.

Das Getriebebauteil 1 weist ein erstes Getriebebauteilelement 3 und ein zweites Getriebebauteilelement 4 auf, die mittels vier Verbindern 5, die jeweils an dem ersten Getriebebauteilelement 3 und an dem zweiten Getriebebauteilelement 4 befestigt sind, elastisch beweglich miteinander verbunden sind. Das erste Getriebebauteilelement 3 ist als Ring ausgebildet und weist mehrere axiale Bohrungen auf, die als Steckausnehmungen 13 für Steckabschnitte 14 der Verbinder 5 ausgebildet sind. Das zweite Getriebebauteilelement 4 ist als innenverzahnter Ring ausgebildet und weist ebenfalls mehrere axiale Bohrungen auf, die als Steckausnehmungen 13 für Steckabschnitte 14 der Verbinder 5 ausgebildet sind.

Das Spannungswellengetriebe weist außerdem einen radialflexiblen außenverzahnten hutförmigen Flexspline 6 auf, der drehfest mit dem Getriebegehäuse 25 verbunden ist und in dem von einem Circularspline 2 umgebenen Raumvolumen angeordnet ist. Innerhalb des Flexsplines 6 ist ein ovaler Wellengeneratoreinsatz 7 rotierbar angeordnet, dessen Außenumfang 8 einen Lagersitz für ein radialflexibles Wälzlager 9 aufweist, das einen Innenring 10, einen Außenring 11 und Wälzkörper 12 hat. Der Wellengeneratoreinsatz 7 ist mit einer Getriebeantriebswelle 29 drehfest verbunden. Über das radialflexible Wälzlager 9 steht der Wellengeneratoreinsatz 7 mit dem radialflexiblen Flexspline 6 in Kontakt. Das radialflexible Wälzlager 9 ermöglicht es, den Wellengeneratoreinsatz 7 relativ zu dem Circularspline 2 rotieren zu können. Der Wellengeneratoreinsatz 7 biegt das Wälzlager 9 und den Flexspline 6 zu einer ovalen Form, um die Verzahnungen des Circularsplines 2 und des Flexsplines 6 in der Hochachse des ovalen Wellengeneratoreinsatzes 7 miteinander in Eingriff zu bringen.

Beispielsweise kann das Getriebe außer dem Drehmomentsensor weitere (nicht dargestellte) Sensoren aufweisen, beispielsweise einen (nicht dargestellten) Temperatursensor und/oder einen (nicht dargestellten) Vibrationssensor. Die weiteren Sensoren können jeweils an einem der Verbinder angeordnet sein.

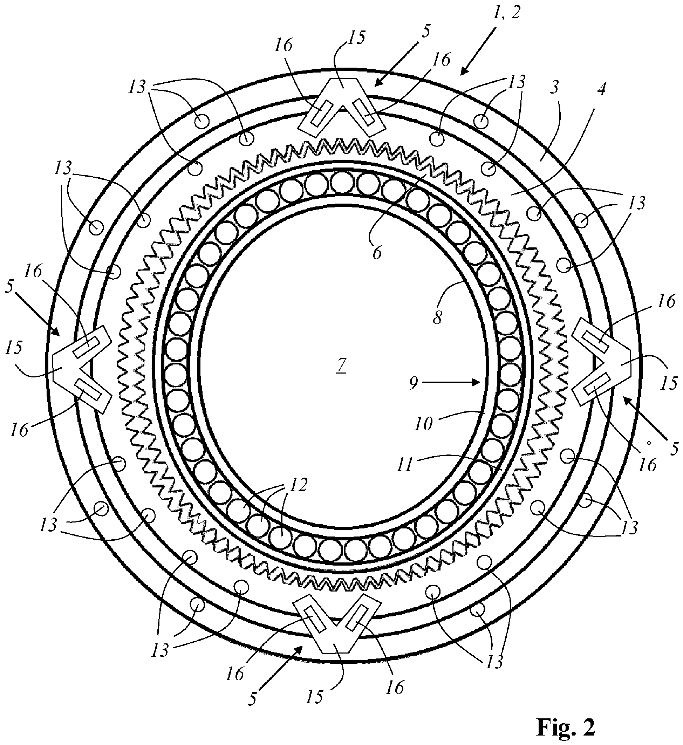

Figur 2 zeigt eine Detailansicht des Spannungswellengetriebes mit einer Blickrichtung entlang der Mittelachse, wobei das Getriebegehäuse 25 und die Getriebeabtriebswelle der besseren Übersichtlichkeit halber nicht dargestellt sind.

Figur 3 zeigt das Getriebebauteil 1 des Spannungswellengetriebes.

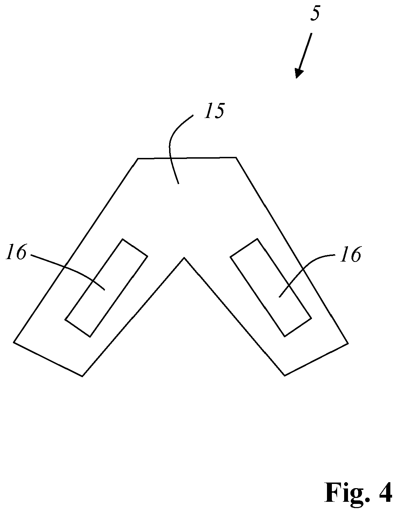

Die Figuren 4 bis 6 zeigen verschiedene Ansichten eines der Verbinder 5 des in Figur 1 dargestellten erfindungsgemäßen Getriebes gemäß dem ersten Ausführungsbeispiel. Die Figur 4 zeigt die Rückansicht eines der Verbinder 5. Es ist in dieser Figur zu erkennen, dass der Verbinder 5 einen v-förmig ausgebildeten Verformungsabschnitt 15 aufweist, der beispielsweise aus einem ausgestanzten Blech hergestellt sein kann. Auf jeden Schenkel des v-förmig ausgebildeten Verformungsabschnitts 15 ist rückseitig jeweils ein Dehnungsmessstreifen 16 angeklebt, der es ermöglicht, die auf die Schenkel des v-förmig ausgebildeten Verformungsabschnitts 15 einwirkenden Zug- bzw. Druckkräfte zu messen.

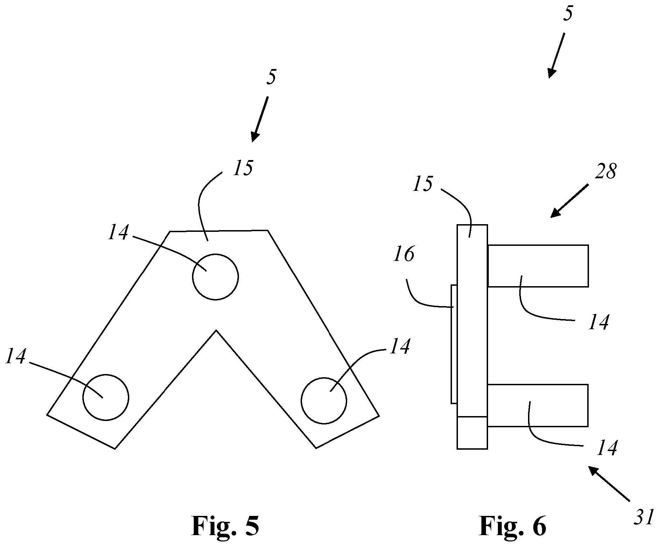

An dem v-förmig ausgebildeten Verformungsabschnitt 15 sind vorderseitige hervorstehende Steckabschnitte 14, die als Steckbolzen ausgebildet sind, angeordnet, die in die Steckausnehmungen 13 des Getriebebauteils 1 eingesteckt werden können, was in den Figuren 5 und 6 gut zu erkennen ist.

Der Verbinder 5 weist einen ersten Befestigungsabschnitt 28 auf, mittels dem er an dem ersten Getriebebauteilelement 3 befestigt wird. Der Verbinder 5 weist außerdem einen zweiten Befestigungsabschnitt 31 auf, mittels dem er an dem zweiten Getriebebauteilelement 4 befestigt wird.

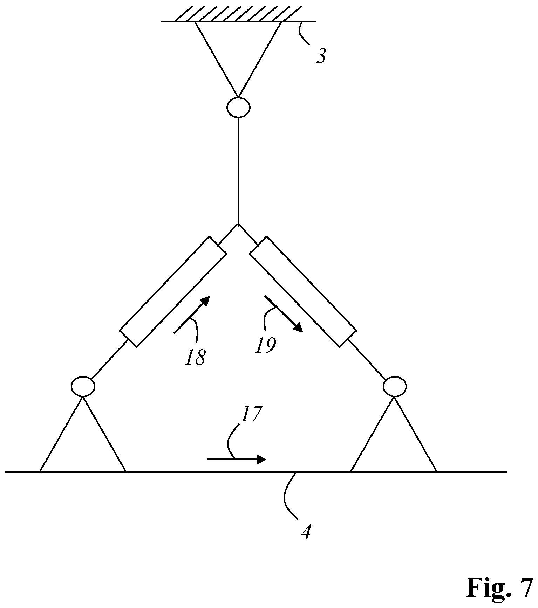

Figur 7 zeigt eine schematische Darstellung der Kräfteverteilung eines der Verbinder 5 für ein erfindungsgemäßes Getriebe gemäß dem ersten Ausführungsbeispiel, wobei beispielhaft das erste Getriebebauteilelement 3 als drehfest gehalten angenommen wird und angenommen wird, dass auf das zweite Getriebebauteilelement 4 eine Kraft 17 einwirkt. Die Kraft 17 bewirkt, dass ein Schenkel des v-förmig ausgebildeten Verformungsabschnitts 15 mit einer Kraft 18 auf Druck belastet wird (in der Figur 7 links) und dass der andere Schenkel des v-förmig ausgebildeten Verformungsabschnitts 15 mit einer Kraft 19 auf Zug belastet wird.

Durch die Messung der Kräfte 18 und 19 kann auf das über das Getriebebauteil 1 übertragene bzw. abgestützte Drehmoment geschlossen werden.

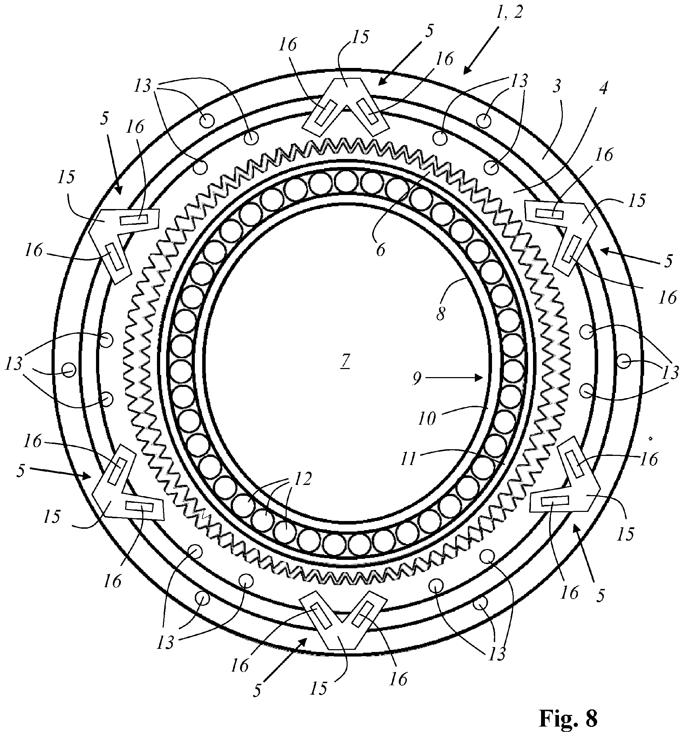

Figur 8 zeigt zweites Ausführungsbeispiel eines erfindungsgemäßen Getriebes, das im Wesentlichen dem ersten Ausführungsbeispiel entspricht, wobei jedoch im Unterscheid zu dem ersten Ausführungsbeispiel insgesamt sechs der Verbinder 5 vorhanden sind. Das Getriebebauteil 1 (Circularspline 2) ist daher bei dem zweiten Ausführungsbeispiel weniger torsionselastisch ausgebildet als bei dem ersten Ausführungsbeispiel.

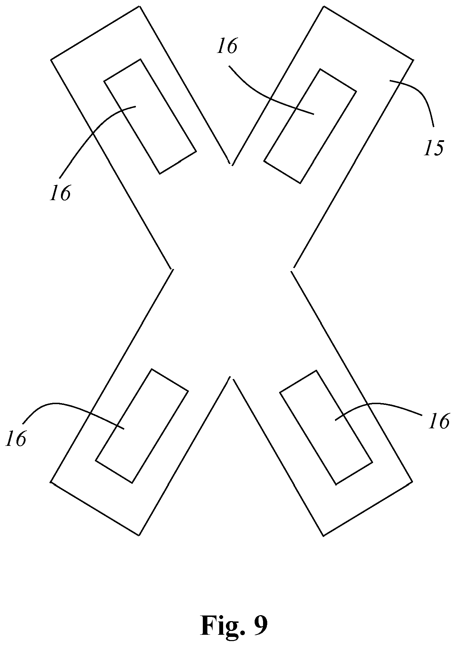

Die Figuren 9 bis 11 zeigen verschiedene Ansichten eines zweiten Ausführungsbeispiels eines Verbinders 5 für ein erfindungsgemäßes Getriebe. Die Figur 9 zeigt die Rückansicht des Verbinders. Es ist in dieser Figur zu erkennen, dass der Verbinder 5 einen x-förmig ausgebildeten Verformungsabschnitt 15 aufweist, der beispielsweise aus einem ausgestanzten Blech hergestellt sein kann. An jeden Schenkel des x-förmig ausgebildeten Verformungsabschnitts 15 ist rückseitig jeweils ein Dehnungsmessstreifen 16 angeklebt, der es ermöglicht, die auf die Schenkel des x-förmig ausgebildeten Verformungsabschnitts 15 einwirkenden Zug- bzw. Druckkräfte zu messen.

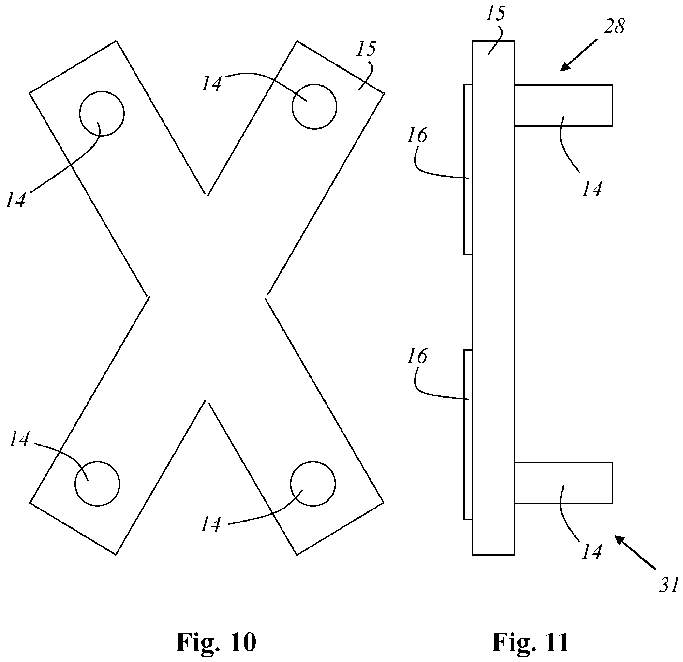

An dem x-förmig ausgebildeten Verformungsabschnitt 15 sind vorderseitige hervorstehende Steckabschnitte 14, die als Steckbolzen ausgebildet sind, angeordnet, die in Steckausnehmungen 13 des Getriebebauteils 1 eingesteckt werden können, was in den Figuren 10 und 11 gut zu erkennen ist.

Das erste Getriebebauteilelement 3 und das zweite Getriebebauteilelement 4 werden mit Steckausnehmungen 13 derart versehen, dass die Steckabschnitte 14 der Verbinder 5 zum Zwecke der Befestigung eingesteckt werden können, wobei die Anzahl und die Anordnung der Steckausnehmungen 13 vorzugsweise derart gewählt ist, dass die Verwendung von unterschiedlichen Anzahlen von Verbindern 5 ermöglicht ist.

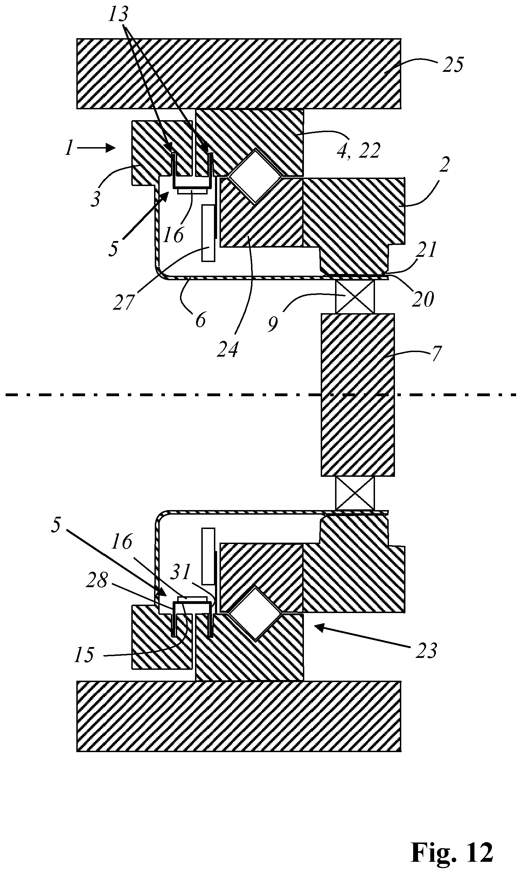

Figur 12 zeigt ein drittes Ausführungsbeispiel eines erfindungsgemäßen Getriebes in einer Querschnittsdarstellung entlang der Mittelachse, das als Spannungswellengetriebe ausgebildet ist. Das Spannungswellengetriebe hat ein Getriebebauteil 1, welches ein Drehmoment überträgt. Das Getriebebauteil 1 weist ein erstes, ringförmiges Getriebebauteilelement 3 und ein zweites Getriebebauteilelement 4 auf, die mittels mehreren Verbindern 5, die jeweils an dem ersten Getriebebauteilelement 3 und an dem zweiten Getriebebauteilelement 4 befestigt ist, elastisch beweglich miteinander verbunden sind.

Das erste Getriebebauteilelement 3 ist als Ring ausgebildet und bildet einen Flansch des hutförmig ausgebildeten und mit einer Außenverzahnung 20 versehenen Flexsplines 6 des Spannungswellengetriebes. Die Außenverzahnung 20 des Flexsplines 6 steht an zwei gegenüberliegenden Stellen mit der Innenverzahnung 21 eines Circularsplines 2 in Zahneingriff. Das erste Getriebebauteilelement 3 weist mehrere radiale Steckausnehmungen 13 für Steckabschnitte 14 der im Querschnitt u-förmig ausgebildeten Verbinder 5 auf. Das zweite Getriebebauteilelement 4 ist als Außenring 22 eines Kreuzrollenlagers 23 ausgebildet, das drehfest mit einen Getriebegehäuse 25 verbunden ist. Der Innenring 24 des Kreuzrollenlagers 23 ist drehfest mit dem Circularspline 2 verbunden und weist ebenfalls mehrere radiale Steckausnehmungen 13 für Steckabschnitte 14 der Verbinder 5 auf.

Das Spannungswellengetriebe weist, wie bereits erwähnt, einen radialflexiblen außenverzahnten Flexspline 6 auf, der in dem von einem Circularspline 2 umgebenen Raumvolumen angeordnet ist. Innerhalb des Flexsplines 6 ist ein ovaler Wellengeneratoreinsatz 7 rotierbar angeordnet, dessen Außenumfang 8 einen Lagersitz für ein radialflexibles Wälzlager 9 aufweist. Über das radialflexible Wälzlager 9 steht der Wellengeneratoreinsatz 7 mit dem radialflexiblen Flexspline 6 in Kontakt. Das radialflexible Wälzlager 9 ermöglicht es, den Wellengeneratoreinsatz 7 relativ zu dem Circularspline 2 rotieren zu können. Der Wellengeneratoreinsatz 7 biegt das Wälzlager 9 und das die Außenverzahnung 20 aufweisende Ende des Flexsplines 6 zu einer ovalen Form, um die Innenverzahnung 21 des Circularsplines 2 und die Außenverzahnung 20 des Flexsplines 6 in der Hochachse des ovalen Wellengeneratoreinsatzes 7 miteinander in Eingriff zu bringen.

Beispielsweise können der Wellengeneratoreinsatz 7 als Getriebeantrieb und der Circularspline 2 als Getriebeabtrieb fungieren, während der über das Getriebebauteil 1 an dem Getriebegehäuse 25 befestigte Flexspline 6 als festgehaltene Welle fungiert.

Das Getriebe weist außerdem eine Steuerungsvorrichtung 27 einer ringförmigen oder ringsegmentförmigen Platine auf, die an dem Außenring befestigt ist und die die Messsignale der Sensoren, insbesondere der Dehnungsmesstreifen 16, empfängt. Die Platine kann auch eine andere Form aufweisen. Beispielsweise kann das Getriebe außer dem Drehmomentsensor weitere (nicht dargestellte) Sensoren aufweisen, beispielsweise einen (nicht dargestellten) Temperatursensor und/oder einen (nicht dargestellten) Vibrationssensor. Die weiteren Sensoren können jeweils an einem der Verbinder angeordnet sein. Die weiteren Sensoren können ihre Messsignale ebenfalls an die Steuerungsvorrichtung 27 übermitteln.

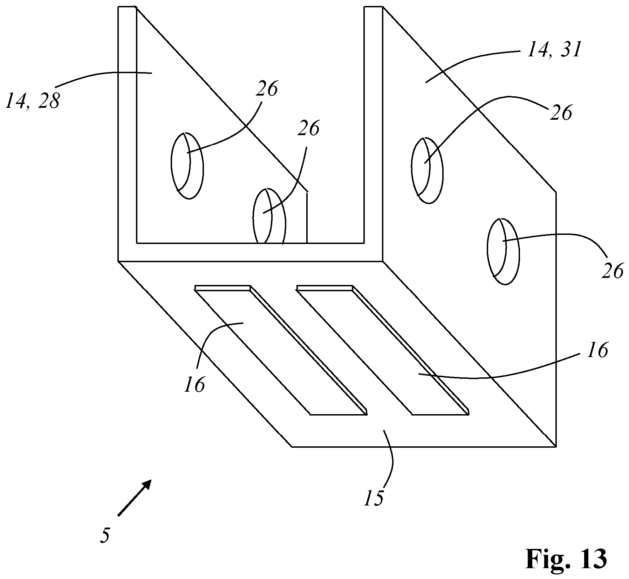

Die Figur 13 zeigt ganz schematisch eine perspektivische Detailansicht eines der Verbinder 5 des dritten Ausführungsbeispiels eines erfindungsgemäßen Getriebes. Die beiden Schenkel des u-förmigen Verbinders 5 fungieren als erster Befestigungsabschnitt 28 und zweiter Befestigungsabschnitt 31, die als Steckabschnitte 14 in die radialen Steckausnehmungen 13 des ersten Getriebebauteilelements 3 und des zweiten Getriebebauteilelements 4 eingesteckt werden. Zusätzlich kann eine (in der Figur 12 nicht dargestellte) Befestigung mittels (nicht dargestellter) Schrauben erfolgen, die durch Bohrungen 26 in den Schenkeln des u-förmigen Verbinders 5 verlaufen. Der die Schenkel des u-förmigen Verbinders 5 verbindende Abschnitt fungiert als Verformungsabschnitt 15, auf den Dehnungsmesstreifen 16 zum Erfassen der jeweiligen elastischen Verformung aufgeklebt sind.

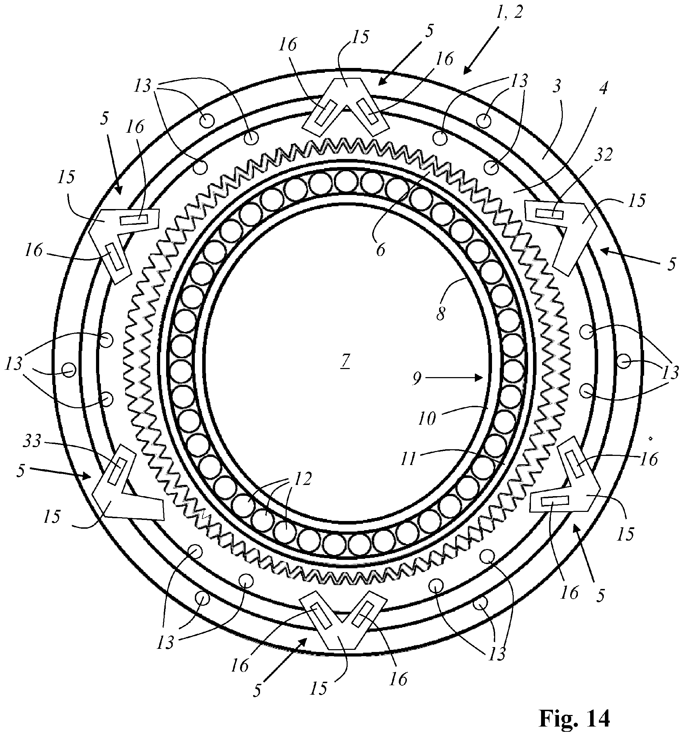

Figur 14 zeigt ein viertes Ausführungsbeispiel eines erfindungsgemäßen Getriebes, das im Wesentlichen dem ersten Ausführungsbeispiel entspricht, wobei jedoch im Unterscheid zu dem ersten Ausführungsbeispiel insgesamt sechs der Verbinder 5 vorhanden sind, wobei vier der Sensoren 5 Dehnungsmessstreifen 16 aufweisen, während ein Verbinder 5 einen Temperatursensor 32 und ein weiterer Verbinder 5 einen Vibrationssensor 33 aufweist.

### Bezugszeichenliste:

- 1: Getriebebauteil
- 2: Circularspline
- 3: erstes Getriebebauteilelement
- 4: zweites Getriebebauteilelement
- 5: Verbinder
- 6: Flexspline
- 7: Wellengeneratoreinsatz
- 8: Außenumfang
- 9: Wälzlager
- 10: Innenring
- 11: Außenring
- 12: Wälzkörper
- 13: Steckabschnitt
- 14: Steckausnehmung
- 15: Verformungsabschnitt
- 16: Dehnungsmessstreifen
- 17: Kraft
- 18: Kraft
- 19: Kraft
- 20: Außenverzahnung
- 21: Innenverzahnung
- 22: Außenring
- 23: Kreuzrollenlager
- 24: Innenring
- 25: Getriebegehäuse
- 26: Bohrungen
- 27: Steuerungsvorrichtung
- 28: Erster Befestigungsabschnitt
- 29: Getriebeantriebswelle
- 30: Getriebeantriebswelle
- 31: Zweiter Befestigungsabschnitt
- 32: Temperatursensor
- 33: Vibrationssensor

## Patentansprüche

1. Getriebe mit einem ersten Getriebebauteilelement (3) und einem zweiten Getriebebauteilelement (4), die mittels wenigstens eines Verbinders, der an dem ersten Getriebebauteilelement (3) und an dem zweiten Getriebebauteilelement (4) befestigt ist, elastisch beweglich, insbesondere relativ zueinander drehbar, miteinander verbunden sind, wobei das erste Getriebebauteilelement (3) und das zweite Getriebebauteilelement (4) derart ausgebildet sind, dass die Anzahl und/oder die Anordnung und/oder die Art der das erste Getriebebauteilelement (3) und das zweite Getriebebauteilelement (4) verbindenden Verbinder ohne strukturelle Veränderung des ersten Getriebebauteilelements und/oder des zweiten Getriebebauteilelements, insbesondere werkzeugfrei, veränderbar ist, **dadurch gekennzeichnet, dass** das Getriebe mehrere hinsichtlich Größe und Form und Anordnung ihrer Befestigungsabschnitte gleich ausgebildete Verbinder (5) aufweist, von denen sich mindestens zwei hinsichtlich wenigstens einer Eigenschaft voneinander unterscheiden.

2. Getriebe nach Anspruch 1, **dadurch gekennzeichnet, dass** jeder Verbinder einen ersten Befestigungsabschnitt (28) aufweist, mittels dem er an dem ersten Getriebebauteilelement (3) befestigt ist, und einen zweiten Befestigungsabschnitt (31) aufweist, mittels dem er an dem zweiten Getriebebauteilelement (4) befestigt ist.

3. Getriebe nach Anspruch 1 oder 2, **dadurch gekennzeichnet, dass** das erste Getriebebauteilelement (3) und das zweite Getriebebauteilelement (4) zusammen mit den sie verbindenden Verbindern ein Getriebebauteil (1) bilden, welches ein Drehmoment überträgt oder ein Drehmoment abstützt.

4. Getriebe nach einem der Ansprüche 1 bis 3, **dadurch gekennzeichnet, dass** a
a. wenigstens ein Befestigungsabschnitt als Steckabschnitt (13) ausgebildet ist oder einen Steckabschnitt (13) aufweist, und dass der erste Gegenbefestigungsabschnitt eine Steckausnehmung (14) ist oder eine Steckausnehmung (14) aufweist, in die der Steckabschnitt (13), insbesondere passgenau, eingreift, und/oder dass
b. der erste Befestigungsabschnitt als Steckabschnitt (13) ausgebildet ist oder einen Steckabschnitt (13) aufweist, und dass der erste Gegenbefestigungsabschnitt eine Steckausnehmung (14) ist oder eine Steckausnehmung (14) aufweist, in die der Steckabschnitt (13), insbesondere passgenau, eingreift, und/oder dass
c. der zweite Befestigungsabschnitt als Steckabschnitt (13) ausgebildet ist oder einen Steckabschnitt (13) aufweist, und dass der zweite Gegenbefestigungsabschnitt eine Steckausnehmung (14) ist oder eine Steckausnehmung (14) aufweist, in die der Steckabschnitt (13), insbesondere passgenau, eingreift.

5. Getriebe nach einem der Ansprüche 1 bis 4, **dadurch gekennzeichnet, dass** das Getriebe wenigstens eines der folgenden Merkmale a bis d aufweist:
a. der Verbinder (5) weist wenigstens einen Druckabschnitt auf, der im Betrieb des Getriebes, insbesondere durch das übertragene oder abgestützte Drehmoment, auf Druck belastet wird,
b. der Verbinder (5) weist wenigstens einen Druckabschnitt auf, der durch einen Druckstab des Verbinders gebildet ist,
c. der Verbinder (5) weist wenigstens einen Zugabschnitt auf, der im Betrieb des Getriebes, insbesondere durch das übertragene oder abgestützte Drehmoment, auf Zug belastet wird,
d. Verbinder (5) weist wenigstens einen Zugabschnitt auf, der durch einen Zugstab des Verbinders gebildet ist.

6. Getriebe nach Anspruch 5, **dadurch gekennzeichnet, dass**, insbesondere je nach Vorzeichen des Drehmomentes, wenigstens ein Schenkel des Verbinders (5) der Zugabschnitt und ein weiterer Schenkel des Verbinders (5) der Druckabschnitt ist.

7. Getriebe nach einem der Ansprüche 1 bis 6, **dadurch gekennzeichnet, dass** das Getriebe wenigstens eines der folgenden Merkmale a bis e aufweist:
a. der Verbinder (5) ist als Sensor ausgebildet oder ist Teil eines Sensors,
b. der Sensor ist als Temperatursensor ausgebildet,
c. der Sensor ist als Vibrationssensor ausgebildet,
d. der Sensor ist als Verformungssensor ausgebildet,
e. der Sensor weist wenigstens einen Dehnungsmesstreifen (16) auf.

8. Getriebe nach einem der Ansprüche 1 bis 7, **dadurch gekennzeichnet, dass** der wenigstens eine Verbinder (5) dazu ausgebildet ist zu brechen und/oder die Befestigung des Verbinders (5) mit dem Getriebebauteilelement (3, 4) dazu ausgebildet ist sich zu lösen, wenn das Drehmoment einen vorgegebenen Wert übersteigt.

9. Getriebe nach einem der Ansprüche 1 bis 8, **dadurch gekennzeichnet, dass** das Getriebe wenigstens eines der folgenden Merkmale a bis g aufweist:
a. das Getriebebauteil (1) ist ringförmig ausgebildet,
b. das erste Getriebebauteilelement (3) ist ringförmig ausgebildet,
c. das zweite Getriebebauteilelement (4) ist ringförmig ausgebildet,
d. das Getriebebauteil (1) weist eine Verzahnung auf,
e. das erste Getriebebauteilelement (3) weist eine Verzahnung auf,
f. das zweite Getriebebauteilelement (4) weist eine Verzahnung auf,
g. das Getriebebauteil (1) ist Teil eines Lagers, mittels dem eine Getriebewelle rotierbar gelagert ist.

10. Getriebe nach einem der Ansprüche 1 bis 9, **dadurch gekennzeichnet, dass** die Anzahl der Verbinder (5) ohne strukturelle Veränderung ersten Getriebebauteilelements (3) und/oder des zweiten Getriebebauteilelements (4), insbesondere werkzeugfrei, veränderbar ist.

11. Getriebe nach einem der Ansprüche 1 bis 10, **dadurch gekennzeichnet, dass** das Getriebe wenigstens eines der folgenden Merkmale a bis j aufweist:
a. das Getriebe weist mehrere gleich ausgebildete Verbinder (5) auf,
b. das Getriebe weist mehrere hinsichtlich Größe und Form gleich ausgebildete Verbinder (5) auf,
c. das Getriebe weist mehrere hinsichtlich Größe und Form und Anordnung der Befestigungsabschnitte gleich ausgebildete Verbinder (5) auf,
d. das Getriebe weist mehrere hinsichtlich Größe und Form gleich ausgebildete Verbinder (5) auf, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden,
e. das Getriebe weist mehrere hinsichtlich Größe und Form und Anordnung der Befestigungsabschnitte gleich ausgebildete Verbinder (5) auf, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden,
f. das erste Getriebebauteilelement (3) oder das zweite Getriebebauteilelement (4) sind mittels mehrerer gleich ausgebildeter Verbinder (5) miteinander verbunden,
g. das erste Getriebebauteilelement (3) oder das zweite Getriebebauteilelement (4) sind mittels mehrerer hinsichtlich Größe und Form gleich ausgebildeter Verbinder (5) miteinander verbunden,
h. das erste Getriebebauteilelement (3) oder das zweite Getriebebauteilelement (4) sind mittels mehrerer hinsichtlich der Größe und Form und Anordnung der Befestigungsabschnitte (28, 31) gleich ausgebildeter Verbinder (5) miteinander verbunden,
i. das erste Getriebebauteilelement (3) oder das zweite Getriebebauteilelement (4) sind mittels mehrerer hinsichtlich Größe und Form gleich ausgebildeter Verbinder (5) miteinander verbunden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden,
j. das erste Getriebebauteilelement (3) oder das zweite Getriebebauteilelement (4) sind mittels mehrerer hinsichtlich Größe und Form und Anordnung der Befestigungsabschnitte gleich ausgebildeter Verbinder (5) miteinander verbunden, von denen sich jedoch mindestens zwei hinsichtlich des Vorhandenseins oder der Art des Sensors und/oder hinsichtlich ihrer Verformungseigenschaften, insbesondere hinsichtlich ihrer Elastizität, voneinander unterscheiden.

12. Getriebe nach einem der Ansprüche 1 bis 11, **dadurch gekennzeichnet, dass** das Getriebe wenigstens eines der folgenden Merkmale a bis c aufweist:
a. der Verbinder weist wenigstens eine elektrische Schnittstelle zum Übertragen von Energie und/oder Messsignalen und/oder Daten auf,
b. das erste Getriebebauteilelement (3) und/oder das zweite Getriebebauteilelement (4) weisen eine elektrische Gegenschnittstelle zur Ankopplung an die elektrische Schnittstelle auf,
c. die elektrische Schnittstelle und die elektrische Gegenschnittstelle koppeln automatisch miteinander, wenn der Verbinder (5) an dem ersten Getriebebauteilelement (3) bzw. dem zweiten Getriebebauteilelement (4) befestigt wird.

13. Set von Verbindern (5) für ein Getriebe nach einem der Ansprüche 1 bis 12, **dadurch gekennzeichnet, dass** die Verbinder (5) hinsichtlich Größe und Form und Anordnung der ersten Befestigungsabschnitte (28) und zweiten Befestigungsabschnitte (31) gleich ausgebildet sind und sich wenigstens zwei der Verbinder (5) hinsichtlich wenigstens einer Eigenschaft voneinander unterscheiden.

14. Aktuator beinhaltend einen Antriebsmotor und ein Getriebe nach einem der Ansprüche 1 bis 12, das dem Antriebsmotor triebtechnisch nachgeschaltet ist, insbesondere mit einer Steuerungsvorrichtung, die Steuerungsvorrichtung dazu ausgebildet ist, den Antriebsmotor zu drosseln und/oder anzuhalten, wenn ein vorgegebener oder vorgebbarer Sensormesswert überschritten wird oder wenn ein vorgegebener oder vorgebbarer Sensormesswert unterschritten wird oder wenn ein vorgegebener oder vorgebbarer Sensormesswertbereich verlassen wird.

15. Verfahren zum Herstellen von Getrieben, insbesondere von Getrieben, die nach einem der Ansprüche 1 bis 12 ausgebildet sind, **dadurch gekennzeichnet, dass** a. eine Vielzahl von, insbesondere gleichen, ersten Getriebebauteilelementen (3) und, insbesondere gleichen, zweiten Getriebebauteilelementen (4) bereitgestellt werden, die jeweils mittels wenigstens eines Verbinders (5), der an dem ersten Getriebebauteilelement (3) und/oder an dem zweiten Getriebebauteilelement befestigbar ist, elastisch beweglich miteinander verbindbar sind, und dass b. eine Vielzahl von Verbindern (5) zum Verbinden jeweils eines der ersten Getriebebauteilelemente (3) mit einem der zweiten Getriebebauteilelemente (4) bereitgestellt werden, wobei die bereitgestellten Verbinder (5) hinsichtlich Größe und Form und Anordnung der ersten Befestigungsabschnitte (28) und zweiten Befestigungsabschnitte (31) gleich ausgebildet sind und sich hinsichtlich wenigstens einer Eigenschaft die Elastizität, insbesondere hinsichtlich das Vorhandensein eines Sensors und/oder die Art des Sensors, voneinander unterscheiden, und dass c. für jedes der herzustellenden Getriebe jeweils eines der ersten Getriebebauteilelemente (3) mit einem der zweiten Getriebebauteilelemente (4) mittels wenigstens eines der Verbinder (5), der sowohl an dem ersten Getriebebauteilelement (3) als auch an dem zweiten Getriebebauteilelement (4) befestigt wird, derart verbunden werden, dass sich wenigstens zwei der Getriebe hinsichtlich der Anzahl und/oder der Anordnung und/oder der Art der das erste Getriebebauteilelement (3) und das zweite Getriebebauteilelement (4) verbindenden Verbinder (5) voneinander unterscheiden.
